# EUROPÄISCHE PATENTANMELDUNG

(11) **EP 0 864 512 A2**
(43) Veröffentlichungstag der Anmeldung: **16.09.1998**
(21) Anmeldenummer: 97112980.4
(22) Anmeldetag: 29.07.1997
(51) Int. Cl.: B65G 47/14

(54) **Zentrifugalsortierer**

(30) Priorität: 15.03.1997 DE 19710820
(71) Anmelder: GRONINGER & CO. GMBH, D-74564 Crailsheim (DE)
(72) Erfinder: Neber, Fritz, Dipl.-Ing. FH, 74523 Schwäbisch Hall (DE)
(74) Vertreter: Kratzsch, Volkhard, Dipl.-Ing.

(57) **Zusammenfassung**

Ein Zentrifugalsortierer (10) hat eine horizontal geneigte und um eine geneigte Achse (13) motorisch drehantreibbare Scheibe (11) und einen im wesentlichen horizontal ausgerichteten, die Scheibe (11) umgebenden und mit dieser etwa im Bereich ihres höchsten Umfangabschnittes eine Übergabestelle (57) für die unter der Einwirkung der Zentrifugalkraft nach außen und oben geförderten Werkstücke bildenden Ring (17), der um eine vertikale Achse (19) motorisch drehantreibbar ist und dessen Wandung (18) etwa kugelabschnittförmig gewölbt ist. Der Ring (17) weist am unteren Außenrand eine annähernd horizontale Ringfläche (23) auf, mit der der Ring (17) auf mehreren Rollen (26 bis 29) aufsitzt, die in Umfangsrichtung der Ringfläche (23) in Abständen voneinander angeordnet sind und die in der Ausbildung als Reibrollen zusammen mit der Ringfläche (23) einen Reibradantrieb bilden, wobei zumindest eine der Rollen (26 bis 29) mittels einer Antriebseinrichtung (20) drehantreibbar ist.

## Beschreibung

Die Erfindung bezieht sich auf einen Zentrifugalsortierer mit den Merkmalen im Oberbegriff des Anspruchs 1.

Es ist ein Zentrifugalsortierer dieser Art bekannt (EP 729 906, A2), bei dem der Ring in Abstand unterhalb der Scheibe geschlossen ist und als Topf mittels geeigneter Lagereinrichtungen vertikal abgestützt und axial sowie radial gelagert ist. Diesem Topf ist eine diesen in Drehung versetzende Antriebseinrichtung zugeordnet, die ein von einem Motor angetriebenes Zahnritzel aufweist, das mit einem Zahnkranz kämmt, welcher auf der Unterseite eines Ringflansches fest angebracht ist, der am oberen Außenrand des Ringes befestigt ist und etwa kegelstumpfförmig mit nach oben weisender Verjüngungsrichtung gestaltet ist. Somit befindet sich die dem Ring zugeordnete Antriebseinrichtung im oberen Außenbereich des Ringes. Die im Inneren des Ringes angeordnete, schräg ausgerichtete Scheibe weist eine Antriebseinrichtung auf, die unterseitig der Scheibe und dabei auf der Oberseite des Bodens des Topfes angeordnet ist. Der Topfboden fungiert somit zugleich als Befestigungsstelle für die der Scheibe zugeordnete Antriebseinrichtung.

Dieser bekannte Zentrifugalsortierer ist hinsichtlich seiner mit den Werkstücken in Kontakt kommenden Bauteile nicht für eine Dampfsterilisierung in einem Autoklaven geeignet; denn der Topf mitsamt dem daran befestigten Ringflansch und Zahnkranz ist in dieser Form nicht demontierbar, so daß er sich zur Dampfsterilisation in einen Autoklaven einbringen ließe, und umgekeht auch nicht wieder montierbar. Dies gilt ferner auch für die Scheibe im Inneren des Topfes, die von ihrer darunter befindlichen Antriebseinrichtung nicht lösbar ist. Der bekannte Zentrifugalsortierer erlaubt auch im zusammengebauten, funktionsfähigen Zustand keine Sterilisation und keine Isolatortechnik, bei der über den Zentrifugalsortierer eine Glocke gestülpt wird, welche den Zentrifugalsortierer dicht abschließt und eine innere Schutzzone umhüllt und bei Betrieb dauernd aufgesetzt bleibt. Mittels dieser aufgesetzten Glocke kann üblicherweise vor Zyklusbeginn eine Sterilisation im zusammengebauten, funktionsfähigen Zustand des Zentrifugalsortierers dadurch geschehen, daß die Luft im Inneren der Glocke getrocknet wird und dann z.B. der Wasseranteil ersetzt wird durch ein geeignetes Sterilisiermedium, z.B. H₂O₂ (Wasserstoffperoxyd), welches eine sterilisierende Wirkung hat. Durch Absaugen und Wiederzuführen werden dabei die im Inneren der Glocke befindlichen Teile des Zentrifugalsortierers sterilisiert. Danach wird das Medium herausgespült und dann durch Frischluft ersetzt, mit der dann bei Betrieb des Zentrifugalsortierers im Inneren der Glocke ein Laminarflow aufrechterhalten wird. Bei dieser beschriebenen, sogenannten Isolatortechnik ergibt sich eine aggressive Atmosphäre, der beim bekannten Zentrifugalsortierer die einzelnen Materialien nicht standhalten; denn beim bekannten Zentrifugalsortierer werden dieser aggressiven Atmosphäre die Antriebseinrichtung des Ringes mit allen Komponenten und ferner die Antriebseinrichtung der Scheibe mit allen Komponenten in vollem Maße ausgesetzt, die dadurch Schaden nehmen.

Etwa die gleichen Nachteile haben auch andere bekannte Zentrifugalsortierer (EP 474 142,A2, DE 3402 139,C2).

Der Erfindung liegt die Aufgabe zugrunde, einen Zentrifugalsortierer der eingangs genannten Art so auszubilden, daß dieser möglichst einfach aufgebaut ist und eine einfache Antriebseinrichtung für den Ring aufweist, die eine leichte Demontage des Ringes, z.B. zum Zwecke einer Dampfsterilisierung in einem Autoklaven, und hiernach eine leichte Montage des Ringes ermöglicht.

Die Aufgabe ist bei einem Zentrifugalsortierer gemäß der Erfindung durch die Merkmale im Anspruch 1 gelöst. Dadurch ist die dem Ring zugeordnete Antriebseinrichtung erheblich vereinfacht, wobei der Ring durch bloßes Abheben nach oben demontierbar und von seiner Antriebseinrichtung trennbar ist und gegensinnig durch bloßes Absenken auf die Rollen montierbar und mit der Antriebseinrichtung wieder kuppelbar ist. Damit sind ringseitig die wesentlichen Voraussetzungen dafür erfüllt, den Ring, z.B. zum Zwecke einer Dampfsterilisierung in einem Autoklaven, leicht und einfach abnehmen zu können.

Weitere vorteilhafte Erfindungsmerkmale und Ausgestaltungen enthalten die Ansprüche 2 bis 13.

Weitere vorteilhafte Erfindungsmerkmale ergeben sich aus Anspruch 14 sowie aus den weiteren Ansprüchen 15 bis 28. Hierdurch ist nicht nur - zusätzlich zum Ring - eine einfache und leichte Demontierbarkeit auch der übrigen, mit den Werkstücken in Kontakt gelangenden Bauteile des Zentrifugalsortierers zum Zwecke einer Sterilisierung in einem Autoklaven und danach eine leichte und einfache Montierbarkeit ermöglicht, sondern es sind ferner dadurch alle Voraussetzungen für eine Sterilisation im zusammengebauten, funktionsfähigen Zustand des Zentrifugalsortierers und anschließend daran für einen Laminarflow erfüllt, ohne daß Bauteile durch das aggressive Sterilisationsmedium Schaden nehmen können. Dadurch, daß die Antriebseinrichtung mit allen sonstigen Antriebselementen für den Ring und ferner die Antriebseinrichtung mit allen sonstigen zugeordneten Elementen für die Scheibe unterhalb der Tischplatte angeordnet sind, werden diese gegenüber dem aggressiven Sterilisationsmedium gefährdeten Bauteile durch die Tischplatte geschützt, welche das aggressive Sterilisationsmedium beim Isolatorbetrieb vom Bereich unterhalb der Tischplatte fern hält. Durch entsprechende Gestaltung und Abdichtung der Elemente des Zentrifugalsortierers, die sich oberhalb der Tischplatte erstrecken, sind auch diese geschützt, wobei auch dadurch einem etwaigen Hindurchgelangen des Mediums durch die Tischplatte und zu dessen Unterseite entgegengewirkt wird. Von Vorteil ist ferner, daß der Zentrifugalsortierer insgesamt auf so wenig Bauteile wie möglich reduziert ist. Der Sortierer ist dadurch kompakt, von relativ geringem Aufwand und hat einen reduzierten Platzbedarf. Dabei ist der Zentrifugalsortierer als eigenständige Funktionseinheit vielfältig einsetzbar und als eigenständige Baueinheit bedarfsweise überall anschließbar und anstellbar.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern stattdessen lediglich durch Nennung der Anspruchsnummern darauf Bezug genommen, wodurch jedoch alle diese Anspruchsmerkmale als an dieser Stelle ausdrücklich und erfindungswesentlich offenbar zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:

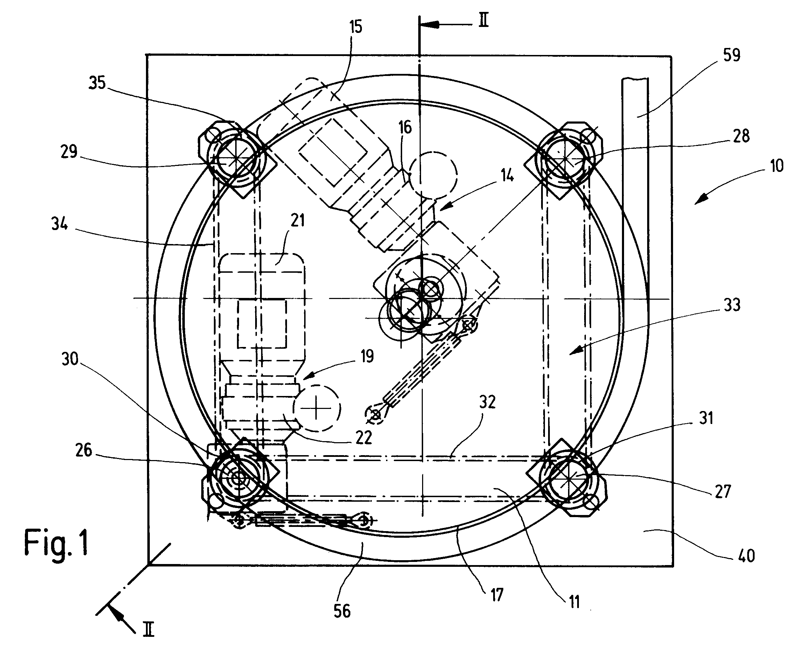

- Fig. 1: eine schematische Draufsicht eines Zentrifugalförderers,
- Fig. 2: einen schematischen Schnitt entlang der Linie II-II in Fig. 1.

In den Zeichnungen ist schematisch ein Zentrifugalsortierer 10 gezeigt, der zum Sortieren von lose geschütteten Werkstücken nahezu beliebiger Art dient, z.B. von medizinischen Fläschchen aus Kunststoff od. dgl.. Der Zentrifugalsortierer 10 stellt eine eigenständige Komplettbaueinheit dar, die an andere Einrichtungen, Anlagen oder Geräte anstellbar ist.

Der Zentrifugalsortierer weist eine Scheibe 11 auf, die den Boden eines Topfes 12 zur Aufnahme der Werkstücke bildet. Die Scheibe 11 ist zumindest schwach kegelförmig. Sie ist gegenüber der Horizontalten geneigt und um eine in Bezug auf die Vertikale schräg verlaufende Achse 13 mittels einer Antriebseinrichtung 14 motorisch antreibbar. Die Antriebseinrichtung 14 weist einen Motor 15 mit einem Verstellgetriebe 16 auf.

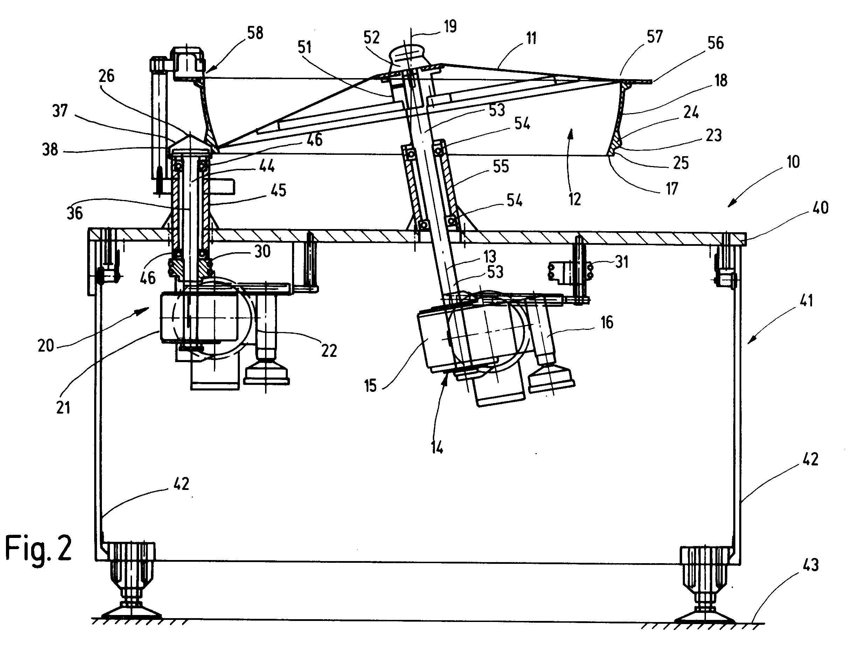

Der Topf 12 wird ferner von einem Ring 17 gebildet, dessen Wandung 18 etwa kugelabschnittförmig gewölbt ist. Der Ring 17 ist im wesentlichen horizontal ausgerichtet und umgibt die Scheibe 11, wobei er mit der Scheibe 11 im Bereich des höchsten, in Fig. 2 rechts befindlichen Umfangsabschnitts der Scheibe eine Übergabestelle für die unter der Einwirkung der Zentrifugalkraft aus dem Topf 12 nach außen und oben geförderten Werkstücke bildet. Der Ring 17 ist um eine etwa vertikale Achse 19 mittels einer Antriebseinrichtung 20 antreibbar, die einen Motor 21 mit Verstellgetriebe 22 aufweist.

Der Ring 17 weist an seiner Außenseite eine umlaufende, zumindest annähernd horizontale Ringfläche 23 auf, die einstückiger Teil des Ringes 17 ist. Die Ringfläche 23 ist an einer Ringverdickung 24 des Ringes 17 vorgesehen. Sie ist mit Vorzug als sich in Richtung der Achse 19 in Fig. 2 nach unten etwa kegelstumpfförmig verjüngende Schrägfläche ausgebildet, wobei sich an die so gestaltete Ringfläche 23 unten eine etwa ringzylindrische Außenfläche 25 anschließt. Die Ringfläche 23 ist beim gezeigten Ausführungsbeispiel am unteren Außenrand des Ringes 17 vorgesehen. Bei einem anderen, nicht gezeigten Ausführungsbeispiel ist die Ringfläche 23 stattdessen weiter oben oder am oberen Außenrand des Ringes 17 angeordnet. Durch die Anordnung am unteren Außenrand des Ringes 17, der aufgrund der kugelkalottenförmigen Gestalt am unteren Außenrand einen kleineren Durchmesser als am oberen Außenrand aufweist, wird Platz gespart. Außerdem hat dies mechanisch technologische Vorteile.

Auf der axialen Höhe der Ringfläche 23 sind mehrere Rollen 26 bis 29 angeordnet, von denen in Fig. 2 nur die eine Rolle 26 sichtbar ist. Die Rollen 26 bis 29 sind in Umfangsrichtung der Ringfläche 23 gesehen in etwa gleich großen Umfangswinkelabständen voneinander angeordnet. Beim gezeigten Ausführungsbeispiel sind vier Rollen 26 bis 29 vorgesehen, die in jeweils 90°-Umfangswinkelabständen aufeinander folgen. Die Rollen 26 bis 29 sind als Reibrollen ausgebildet, auf denen der Ring 17 mit seiner Ringfläche 23 in Richtung der Achse 19 aufgesetzt, abgestützt und zentriert ist, wobei der Ring 17 in Richtung der Achse 19 schnell und einfach nach oben von den Rollen 26 bis 29 abhebbar und entfernbar ist. Die Rollen 26 bis 29 bilden zusammen mit der Ringfläche 23 des Ringes 17 einen Reibradantrieb für den Ring 17. Zumindest eine der Rollen, beim gezeigten Ausführungsbeispiel die Rolle 26, ist mittels des Motors 21 mit Verstellgetriebe 22 drehantreibbar. Auch die anderen Rollen 27 bis 29 sind drehangetrieben, wobei der Drehantrieb jeweils einer dieser Rollen 27 bis 29 mittels eines jeweiligen Riemengetriebes von demjenigen einer anderen dieser Rollen abgeleitet ist. So wird der Antrieb der Rolle 27 vom Antrieb der Rolle 26 abgeleitet mittels zweier Riemenscheiben 30, 31 und eines diese umschlingenden Riemens 32. Der Antrieb der anderen Rolle 28 ist über ein entsprechendes Riemengetriebe 33 von demjenigen der Rolle 27 abgeleitet. Der Antrieb der Rolle 29 ist analog zur Rolle 27 vom Antrieb der Rolle 26 abgeleitet, und zwar mittels eines Riemens 34, der die Riemenscheibe 30 mit einer Riemenscheibe 35 verbindet. Zumindest einige der Rollen, vorzugsweise jedoch alle Rollen 26 bis 29, sind aus Gummi oder Kunststoff gebildet, zumindest auf ihrer Oberseite, die in Kontakt mit der Ringfläche 23 und bedarfsweise mit der Außenfläche 25 steht. Der Ring 17 ist bereits hinreichend über die Ringfläche 23, mit der Ring 17 auf den Rollen 26 bis 29 aufsitzt, zwischen den Rollen 26 bis 29 zentriert. Bedarfsweise kann zu einer zusätzlichen Zentrierung auch noch die etwa ringzylindrische Außenfläche 25 des Ringes 17 herangezogen werden. Jede Rolle 26 bis 29 ist um eine im wesentlichen vertikale Achse drehbar gelagert, was in Fig. 2 hinsichtlich der Rolle 26 durch deren Achse 36 verdeutlicht ist. Jede Rolle 26 bis 29 weist eine sich nach oben hin etwa kegelstumpfförmig verjüngende Stützfläche auf, wie in Fig. 2 allein bei der Rolle 26 durch die dortige Stützfläche 37 verdeutlicht ist. Bei jeder Rolle 26 bis 29 schließt sich an die Stützfläche 37 unten eine zylindrische Außenfläche 38 an. Bei auf den Rollen 26 bis 29 aufsitzendem Ring 17 liegt letzterer mit seiner Ringfläche 23 im Bereich der jeweiligen Stützfläche 37 auf, die die vertikalen Gewichtskräfte aufnimmt und aufgrund der Neigung auch eine Zentrierung bewirkt. Bei Bedarf kann eine zusätzliche Zentrierung dadurch herbeigeführt werden, daß der Ring 17 mit der Außenfläche 25 zwischen den Rollen 26 bis 29 in der Weise zentriert ist, daß die Außenfläche 38 der Rollen 26 bis 29 in Anlageberührung mit der Außenfläche 25 steht.

Die Gewichtskräfte des Ringes 17 sind ausreichend groß, um allein dadurch eine ausreichende Anpreßkraft an den Rollen 26 bis 29 herbeizuführen, die bei Antrieb der Rollen 26 bis 29 ausreicht, um darüber den Ring 17 in einer Richtung drehend um die Achse 19 anzutreiben. Die Scheibe 11 wird mittels ihrer Antriebseinrichtung 14 in gleichem Drehsinn angetrieben wie der Ring 17, jedoch z.B. mit demgegenüber höherer Drehzahl. Der Durchmesser der Scheibe 11 ist in Anpassung an das Innenmaß des Ringes 17 so gewählt, daß möglichst nur ein geringer Ringspalt dazwischen vorliegt, der kleiner ist als die kleinste Größe der mittels des Zentrifugalsortierers 10 zu sortierenden und zu transportierenden Werkstücke.

Der Zentrifugalsortierer 10 weist eine im wesentlichen horizontale Tischplatte 40 auf, oberhalb der der Ring 17, die Scheibe 11 und die Rollen 26 bis 29 angeordnet sind. Die Tischplatte 40 ist mittels eines geeigneten Fußteiles 41, z.B. mittels höhenverstellbarer Stützen 42, in Abstand von einer Aufstellfläche 43 gehalten. Generell ist die Tischplatte 40 als den Bereich oberhalb dieser gegenüber demjenigen unterhalb dieser dicht trennende Dichtplatte ausgebildet. Dies wird im einzelnen noch verdeutlicht.

Die Rollen 26 bis 29 sind jeweils an etwa vertikal verlaufenden Wellen gehalten, von denen in Fig. 2 lediglich die Welle 44 der Rolle 26 dargestellt ist. Nachfolgend am Beispiel der Rolle 26 erläuterte weitere Details gelten gleichermaßen für alle Rollen 26 bis 29. Die Welle 44 ist unter Abdichtung durch die Tischplatte 40 hindurchgeführt. Die Antriebseinrichtung 20 mit sämtlichen an den jeweiligen Wellen, wie der Welle 44, angreifenden Antriebsmitteln sind unterhalb der Tischplatte 40 angeordnet. Die Welle 44 ist in einer Hülse 45 mittels Lagern 46 gelagert und geführt. Die Hülse 45 der Welle 44 ist mit Abdichtung durch die Tischplatte 40 hindurch nach unten geführt, wobei das untere Lager 46 in der Hülse 45 unterhalb der Tischplatte 40 angeordnet ist. Das Innere zwischen der Welle 44 und der Hülse 45 ist im Bereich oberhalb der Tischplatte 40 abgedichtet, z.B. im Bereich des oberen Lagers 46. Aufgrund der Abdichtung kann weder durch das Innere zwischen der Welle 44 und der Hülse 45 noch durch den die Welle 44 und Hülse 45 hindurchlassenden Durchbruch in der Tischplatte 40 Medium nach unten in den Bereich der dortigen Antriebseinrichtung 20 gelangen. Auch die Rollen 27 bis 29 weisen analog der Rolle 26 eine entsprechende Welle 44 innerhalb einer Hülse 45 mit Lagern 46 auf. Soll die Hülse 45 nicht durch die Tischplatte 40 hindurchgeführt werden, so kann die Hülse 45 auch dicht auf der Oberseite der Tischplatte 40 aufgesetzt sein.

Die Scheibe 11 ist von oben her auf einen Scheibenträger 51 aufgesetzt und an diesem lösbar gehalten, z.B. mit einer von Hand leicht lösbaren bzw. festziehbaren Mutter 52. Der Scheibenträger 51 erstreckt sich oberhalb der Tischplatte 40. Er steht mit der Antriebseinrichtung 14 in Verbindung, die dem Drehantrieb der Scheibe 11 um die Achse 13 dient. Die Antriebseinrichtung 14 ist unterhalb der Tischplatte 40 angeordnet, und dies unter Abdichtung des oberen, sich nach oben bis zur Scheibe 11 erstreckenden Bereichs. Der Scheibenträger 51 ist an einer schräg verlaufenden Welle 53 gehalten, die mittels Lagern 54 in einer Hülse 55 gelagert ist. Die Hülse 55 ist entweder dicht auf die Oberseite der Tischplatte 40 aufgesetzt oder z.B. analog der Hülse 45 unter Abdichtung durch die Tischplatte 40 hindurch nach unten geführt. Das Innere zwischen der Welle 53 und der Hülse 55 ist im Bereich oberhalb der Tischplatte 40 abgedichtet. Die Welle 53 ist unter Abdichtung gegenüber der Tischplatte 40 und/oder der Hülse 55 durch die Tischplatte 40 hindurch nach unten geführt und steht dort mit der Antriebseinrichtung 14 in Verbindung, die unterhalb der Tischplatte 40 angeordnet ist. Aufgrund dieser Gestaltung kann somit auch kein Medium von der Oberseite der Tischplatte 40 durch letztere hindurch in den Bereich der Antriebseinrichtung 14 gelangen. Ansonsten ist die Tischplatte 40 nicht durchbrochen. Aufgrund dessen und aufgrund der im Bereich der Durchführungen vorgesehenen Abdichtungen ist die Tischplatte 40 somit als den Bereich oberhalb dieser gegenüber demjenigen unterhalb dieser dicht trennende Dichtplatte ausgebildet.

Der Ring 17 kann etwa auf der Höhe der Übergabestelle 57, somit im wesentlichen am oberen Außenrand, einen vom Ring 17 abnehmbaren Ringflansch 56 aufweisen, der z.B. bei Bedarf mittels eines vertikalen Stiftes oder Vorsprunges, der in eine entsprechende Ausnehmung am Ring 17 formflüssig eingreift, in Bezug auf den Ring 17 gegen Relativdrehung gesichert ist, jedoch lose von oben her auf den Ring 17 aufgelegt ist und somit schnell und einfach abnehmbar bzw. gegensinnig wieder aufsetzbar ist. Im Betrieb des Zentrifugalsortierers werden die Werkstücke, die etwa bis hin zur Übergabestelle 57 transportiert werden, auf die Oberseite des Ringflansches 56 geschoben.

Der Ring 17 kann ferner auf Höhe der Übergabestelle 57 im Bereich seines oberen Außenrandes eine etwa in einer horizontalen Ebene verlaufende, nur schematisch angedeutet Führungseinrichtung 58 zur Führung der Werkstücke aufweisen. Die Führungseinrichtung 58 kann z.B. zumindest einen hochstehenden Reifen aufweisen, der einen Anschlag für auf den Ringflansch 56 geförderte Werkstücke bildet und diese im Bogen bis hin zur Abführstelle 59 leitet. Die Führungseinrichtung 58 kann z.B. in üblicher Weise gestaltet sein. Sie ist in gleicher Weise wie die Scheibe 11, der Ring 17 und der Ringflansch 56 schnell und einfach demontierbar bzw. wieder montierbar. Je nach Gestaltung kann die Führungseinrichtung 58 z.B. an der Hülse 45 lösbar gehalten sein.

Der Ring 17 ist mit Vorteil aus einem Schmiede-Drehteil gebildet. Die Scheibe 11 und/oder der Ring 17 und/oder der Ringflansch 56 und/oder die Führungseinrichtung 58 weisen eine möglichst glatte, porenarme oder sogar porenfreie Oberfläche auf. Sie sind ablösbar und demontierbar, insbesondere zum Zwecke einer Sterilisation, insbesondere Dampfsterilisation, innerhalb eines separaten, an anderer Stelle befindlichen Sterilisators, insbesondere eines Autoklaven.

Mit Vorteil sind ferner die Scheibe 11 und/oder der Ring 17 und/oder der Ringflansch 56 und/oder die Führungseinrichtung 58 aus rost- und säurebeständigem Edelstahl gebildet, z.B. aus V4A. Auch die sonstigen, oberhalb der Tischplatte 40 befindlichen Teile der Antriebseinrichtungen 14 und 20, z.B. die Wellen 44, 53 und die Hülsen 45, 55, sind mit Vorteil aus dem gleichen Material hergestellt.

Der Zentrifugalsortierer in der beschriebenen Gestaltung hat den Vorteil, daß sich die mit den Werkstücken in Berührung kommenden Teile schnell und einfach herausnehmen und zur Dampfsterilisierung in einen Autoklaven einbringen lassen und nach der Dampfsterilisierung schnell und einfach wieder montieren lassen und eine funktionsfähige Einheit ergeben. Soll z.B. diese Dampfsterilisation erfolgen, so wird zunächst die Scheibe 11 vom Scheibenträger 51 gelöst und abgehoben, ferner die Führungseinrichtung 58 gelöst und entfernt, ferner der Ringflansch 56 nach oben abgehoben und der Ring 17 von den Rollen 36 bis 29 nach oben abgehoben. All diese Teile, die relativ unkompliziert und relativ leicht sind, lassen sich somit schnell entfernen und zu einem an anderer Stelle plazierten Autoklaven transportieren, in dem die Dampfsterilisation erfolgt. Danach lassen sich diese Teile wieder schnell und einfach montieren. Die Demontage und die Montage läßt sich schnell und problemlos bewerkstelligen. Der Zentrifugalsortierer 10 ist somit hinsichtlich der mit den Werkstücken in Berührung gelangenden Bestandteile in einfacher Weise einer Dampfsterilisierung im Autoklaven zugänglich.

Darüber hinaus ist der Zentrifugalsortierer 10 aber auch so gestaltet, daß der eine Sterilisation im zusammengebauten, funktionsfähigen Zustand und anschließend daran einen sogenannten Laminarflow erlaubt. Bei dieser Technik wird auf die Oberseite der Tischplatte 40 ein etwa glockenförmiger Behälter gestülpt, der dicht auf der Tischplatte 40 aufsitzt und die sich oberhalb der Tischplatte 40 befindlichen Bestandteile des Zentrifugalsortierers 10 überdeckt. Der Behälter umhüllt eine innere Schutzzone. Er bleibt im Betrieb dauernd aufgesetzt. Zu Beginn des Betriebes erfolgt die Sterilisation z.B. dadurch, daß Luft im Inneren des aufgestülpten Behälters getrocknet wird und dann z.B. der Wasseranteil ersetzt wird durch H₂O₂ (Wasserstoffperoxyd), das eine sterilisierende Wirkung, jedoch keine Reinigungswirkung, hat. Durch Absaugen und Wiederzuführen wird das Innere im Behälter auf diese Weise sterilisiert und danach das Medium herausgespült und dann durch Frischluft ersetzt, mit der dann im Betrieb des Zentrifugalsortierers 10 im Inneren ein Laminarflow aufrechterhalten bleibt. Bei dieser beschriebenen, sogenannten Isolator-Technik ergibt sich eine aggressive Atmosphäre. Dieser ist beim beschriebenen Zentrifugalsortierer 10 dadurch Rechnung getragen, daß die Scheibe 11, der Ring 17, der Ringflansch 56 und z.B. die Führungseinrichtung 58 aus rost- und säurebeständigem Edelstahl bestehen, was ferner auch für die sonstigen Antriebsteile gilt, die sich oberhalb der Tischplatte 40 erstrecken. Ferner ist dieser Isolator-Technik mit den Problemen beim beschriebenen Zentrifugalsortierer 10 dadurch Rechnung getragen, daß die Antriebseinrichtungen 14 und 20 abgedichtet unterhalb der Tischplatte 40 angeordnet sind und auch ansonsten die Durchführungen durch die Tischplatte 40 abgedichtet sind, so daß kein aggressives Medium in den Bereich unterhalb der Tischplatte 40 gelangen kann und auch nicht in den Bereich zwischen den Wellen 44, 53 und den Hülsen 45, 55, wo sich jeweils die Lager befinden, eindringen kann. Aufgrund dieser dichten Trennung zwischen der Region oberhalb der Tischplatte 40 und der Region unterhalb letzterer kann bei der Isolator-Technik aggressives Medium somit die Antriebseinrichtungen 14, 20 mit allen Bauteilen dazu nicht erreichen und somit nicht schädigen.

## Patentansprüche

1. Zentrifugalsortierer, mit einer den Boden eines Topfes (12) zur Aufnahme von Werkstücken bildenden, gegenüber der Horizontalen geneigten und um eine geneigte Achse (13) mittels einer Antriebseinrichtung (14) motorisch antreibbaren Scheibe (11), mit einem im wesentlichen horizontal ausgerichteten, die Scheibe (11) umgebenden und mit dieser etwa im Bereich ihres höchsten Umfangsabschnitts eine Übergabestelle (57) für die unter der Einwirkung der Zentrifugalkraft aus dem Topf (12) nach außen und oben geförderten Werkstücke bildenden, um eine etwa vertikale Achse (19) mittels einer Antriebseinrichtung (20) antreibbaren Ring (17), dessen Wandung (18) etwa kugelabschnittförmig gewölbt ist, wobei die Antriebseinrichtung (20) des Ringes (17) mindestens ein von einem Motor (21) angetriebenes Antriebsglied aufweist, das an der Außenseite des Ringes (17) zu dessen Drehantrieb angreift,
**dadurch gekennzeichnet,**
daß der Ring (17) an seiner Außenseite eine umlaufende, zumindest annähernd horizontale Ringfläche (23) aufweist, daß auf der Höhe der Ringfläche (23) mehrere Rollen (26 bis 29) angeordnet sind, die in Umfangsrichtung der Ringfläche (23) in etwa gleich großen Umfangswinkelabständen voneinander angeordnet sind und auf denen der Ring (17) mit seiner Ringfläche (23) in Achsrichtung aufgesetzt, abgestützt und zentriert ist, daß die mehreren Rollen (26 bis 29) als Reibrollen ausgebildet sind, die zusammen mit der Ringfläche (23) des Ringes (17) einen Reibradantrieb bilden, und daß zumindest eine der Rollen (26 bis 29) mittels des Motors (21) drehantreibbar ist.

2. Zentrifugalsortierer nach Anspruch 1,
**dadurch gekennzeichnet**,
daß die Ringfläche (23) am unteren Außenrand des Ringes (17) vorgesehen ist.

3. Zentrifugalsortierer nach Anspruch 1 oder 2,
**dadurch gekennzeichnet**,
daß die Ringfläche (23) an einer Ringverdickung (24) des Ringes (17) vorgesehen ist.

4. Zentrifugalsortierer nach einem der Ansprüche 1 bis 3,
**dadurch gekennzeichnet,**
daß die Ringfläche (23) als sich in Achsrichtung des Ringes (17) nach unten etwa kegelstumpfförmig verjüngende Schrägfläche ausgebildet ist.

5. Zentrifugalsortierer nach einem der Ansprüche 1 bis 4,
**dadurch gekennzeichnet**,
daß jede Rolle (26 bis 29) um eine etwa vertikale Achse (36) drehbar gelagert ist.

6. Zentrifugalsortierer nach einem der Ansprüche 1 bis 5,
**dadurch gekennzeichnet**,
daß jede Rolle (26 bis 29) eine sich nach oben hin etwa kegelstumpfförmig verjüngende Stützfläche (37) aufweist.

7. Zentrifugalsortierer nach einem der Ansprüche 1 bis 6,
**dadurch gekennzeichnet**,
daß sich an die Ringfläche (23) des Ringes (17) unten eine etwa ringzylindrische Außenfläche (25) anschließt.

8. Zentrifugalsortierer nach einem der Ansprüche 1 bis 7,
**dadurch gekennzeichnet**,
daß jede Rolle (26 bis 29) eine sich unten an die Stützfläche (37) anschließende, etwa zylindrische Außenfläche (38) aufweist.

9. Zentrifugalsortierer nach Anspruch 7 oder 8,
**dadurch gekennzeichnet**,
daß der Ring (17) mit der etwa ringzylindrischen Außenfläche (25) zwischen den Rollen (26 bis 29) zentriert ist, die mit ihrer jeweiligen zylindrischen Außenfläche (38) an der Außenfläche (25) des Ringes (17) anliegen können.

10. Zentrifugalsortierer nach einem der Ansprüche 1 bis 9,
**dadurch gekennzeichnet**,
daß vier in jeweils 90°-Umfangswinkelabständen entlang der Ringfläche (23) aufeinander folgende Rollen (26 bis 29) vorgesehen sind.

11. Zentrifugalsortierer nach einem der Ansprüche 1 bis 10,
**dadurch gekennzeichnet**,
daß zumindest einige, vorzugsweise alle, Rollen (26 bis 29), zumindest auf ihrer die zylindrische Außenfläche (38) und/oder Stützfläche (37) aufweisenden Außenseite aus Gummi oder Kunststoff gebildet sind.

12. Zentrifugalsortierer nach einem der Ansprüche 1 bis 11,
**dadurch gekennzeichnet**,
daß der Motor (21) zum Antrieb der mindestens einen Rolle (26) ein Verstellgetriebe (22) aufweist.

13. Zentrifugalsortierer nach einem der Ansprüche 1 bis 12,
**dadurch gekennzeichnet**,
daß sämtliche Rollen (26 bis 29) drehangetrieben sind, wobei der Drehantrieb jeweils einer Rolle mittels eines jeweiligen Riemengetriebes (30 bis 35) von demjenigen einer anderen Rolle abgeleitet ist.

14. Zentrifugalsortierer nach einem der Ansprüche 1 bis 13,
**gekennzeichnet durch**
eine etwa horizontale Tischplatte (40), oberhalb der der Ring (17), die Scheibe (11) und die Rollen (26 bis 29) angeordnet sind.

15. Zentrifugalsortierer nach einem der Ansprüche 1 bis 14,
**dadurch gekennzeichnet,**
daß die Rollen (26 bis 29) an etwa vertikal verlaufenden Wellen (44) gehalten sind, die unter Abdichtung durch die Tischplatte (40) hindurchgeführt sind, und daß die Antriebseinrichtung (20) mit sämtlichen an den Wellen (44) angreifenden Antriebsmitteln (21, 22, 30 bis 35) unterhalb der Tischplatte (40) angeordnet sind.

16. Zentrifugalsortierer nach Anspruch 15,
**dadurch gekennzeichnet**,
daß je Rolle (26 bis 29) deren Wellen (44) in Hülsen (45) gelagert und geführt sind, die unter Abdichtung durch die Tischplatte (40) hindurch nach unten geführt und/oder auf der Tischplatte (40) dicht aufgesetzt sind, und daß das Innere zwischen der jeweiligen Welle (44) und Hülse (45) im Bereich oberhalb der Tischplatte (40) abgedichtet ist.

17. Zentrifugalsortierer nach einem der Ansprüche 1 bis 16,
**dadurch gekennzeichnet**,
daß die Scheibe (11) an einem Scheibenträger (51) lösbar gehalten ist, der sich oberhalb der Tischplatte (40) erstreckt und mit der der Scheibe (11) zugeordneten Antriebseinrichtung (14) in Verbindung steht, die unter Abdichtung des oberen Bereichs unterhalb der Tischplatte (40) angeordnet ist.

18. Zentrifugalsortierer nach Anspruch 17,
**dadurch gekennzeichnet**,
daß der Scheibenträger (51) an einer schräg verlaufenden Welle (53) gehalten ist, die in einer Hülse (55) gelagert ist, welche auf der Tischplatte (40) dicht aufgesetzt ist oder unter Abdichtung durch die Tischplatte (40) hindurch nach unten geführt ist.

19. Zentrifugalsortierer nach Anspruch 18,
**dadurch gekennzeichnet**,
daß das Innere zwischen der Welle (53) und der Hülse (55) im Bereich oberhalb der Tischplatte (40) abgedichtet ist.

20. Zentrifugalsortierer nach einem der Ansprüche 14 bis 19,
**dadurch gekennzeichnet**,
daß die Tischplatte (40) als den Bereich oberhalb dieser gegenüber demjenigen unterhalb dieser dicht trennende Dichtplatte ausgebildet ist.

21. Zentrifugalsortierer nach einem der Ansprüche 1 bis 20,
**dadurch gekennzeichnet**,
daß die Tischplatte (40) mittels eines Fußteiles (41) in Abstand von einer Aufstellfläche (43) gehalten ist.

22. Zentrifugalsortierer nach einem der Ansprüche 1 bis 21,
**dadurch gekennzeichnet**,
daß der Ring (17) auf der Höhe der Übergabestelle (57) an seinem oberen Außenrand einen abnehmbaren Ringflansch (56) trägt.

23. Zentrifugalsortierer nach einem der Ansprüche 1 bis 22,
**dadurch gekennzeichnet**,
daß der Ring (17) auf der Höhe der Übergabestelle (57) im Bereich seines oberen Außenrandes eine Führungseinrichtung (58) zur Führung der Werkstücke aufweist.

24. Zentrifugalsortierer nach einem der Ansprüche 1 bis 23,
**dadurch gekennzeichnet**,
daß die Scheibe (11) und/oder der Ring (17) und/oder der Ringflansch (56) und/oder die Führungseinrichtung (58) ablösbar und demontierbar ausgebildet sind, insbesondere zum Zwecke einer Sterilisation, insbesondere Dampfsterilisation, innerhalb eines separaten Sterilisators, insbesondere eines Autoklaven.

25. Zentrifugalsortierer nach einem der Ansprüche 1 bis 24,
**dadurch gekennzeichnet**,
daß der Ring (17) aus einem Schmiede-Drehteil gebildet ist.

26. Zentrifugalsortierer nach einem der Ansprüche 1 bis 25,
**dadurch gekennzeichnet**,
daß die Scheibe (11) zumindest schwach kegelförmig mit nach oben weisender Verjüngungsrichtung ausgebildet ist.

27. Zentrifugalsortierer nach einem der Ansprüche 1 bis 26,
**dadurch gekennzeichnet**,
daß zumindest die Scheibe (11) und/oder der Ring (17) und/oder der Ringflansch (56) und/oder die Führungseinrichtung (58) eine glatte, porenarme oder porenfreie Oberfläche aufweisen.

28. Zentrifugalsortierer nach einem der Ansprüche 1 bis 27,
**dadurch gekennzeichnet**,
daß zumindest die Scheibe (11) und/oder der Ring (17) und/oder der Ringflansch (56) und/oder die Führungseinrichtung (58) aus rost- und säurebeständigem Edelstahl, z.B. aus V4A, gebildet sind.
